# EUROPEAN PATENT SPECIFICATION

(11) **EP 0 632 741 B1**
(45) Date of publication and mention of the grant of the patent: **28.08.1996**
(21) Application number: 93906526.4
(22) Date of filing: 15.03.1993
(51) Int. Cl.: B01D 53/34

(54) **METHOD AND APPARATUS FOR SELECTIVE REDUCTION OF THE NO-CONTENT OF EXHAUST GASES FROM A KILN PLANT**
VERFAHREN UND VORRICHTUNG ZUR SELEKTIVEN REDUKTION DES STICKSTOFFOXIDGEHALTES VON ABGASEN EINER OFENANLAGE
APPAREIL ET METHODE DE REDUCTION SELECTIVE DU MONOXYDE D' AZOTE CONTENU DANS LES GAZ REJETES PAR UN FOUR INDUSTRIEL

(30) Priority: 27.03.1992 DK 410/92
(43) Date of publication of application: 11.01.1995
(73) Proprietor: F.L. Smidth & Co. A/S, DK-2500 Valby, Copenhagen (DK)
(72) Inventor: HUNDEBOL, Soren, DK-2500 Valby (DK)
(74) Representative: Jackson, Peter Arthur
(86) International application number: EP9300588
(87) International publication number: WO9319837

(56) References cited:
- EP-A- 0 337 073
- EP-A- 0 424 894
- WO-A-89/07982
- FR-A- 2 290 241
- PATENT ABSTRACTS OF JAPAN vol. 1, no. 54 (C-77)25 May 1977
- DATABASE WPIL Section Ch, Week 9049, Derwent Publications Ltd., London, GB; Class E31, AN 90-366367
- ZEMENT, KALK, GIPS vol. 45, no. 5, May 1992, WIESBADEN DE pages 231 - 237 K. THOMSEN & S.HUNDEBÖL 'NOx-Reduzierung durch Injektion von Ammoniak in das Zementofensystem'

## Description

The invention relates to a method for selective reduction of NO-content of exhaust gases from a kiln plant by means of ammonia, according to which method the ammonia is introduced into the NO-containing exhaust gases in the presence of oxygen (0₂) at a temperature between 700° and 1100°C. The invention also relates to an apparatus for carrying out the method.

A method of the aforementioned kind is known from the description of US patent No. 3900554. This patent provides a general description of the method in terms of the necessary quantities of ammonia and oxygen which must be present and the temperature range within which the process must take place. However, the patent does not provide any solutions of the practical implementation of the method.

By use of this method a number of problems will occur. For example, if liquid ammonia from a pressure tank is used, in which tank the ammonia is normally kept at its boiling point, then the ammonia will tend to boil up when it is conveyed to the point of application, which will typically be located at a higher level than the tank, which again, besides giving rise to cavitation problems, makes it difficult to control the supply rate of ammonia to the exhaust gases. This problem may simply be solved by increasing the hydraulic pressure of the ammonia, for example by means of a pump, but this would require that the pressure is lowered again, for example in a nozzle injecting the ammonia, but it has then turned out that the nozzle employed for spraying the ammonia into the exhaust gases has a very limited service life.

Practical experience has further shown that introduction of pure ammonia into an exhaust gas will not lead to any reduction of the NO-content; instead, the NO-content will be increased due to the fact that the ammonia is burnt off in the exhaust gas duct, giving rise to NO-formation.

Finally, it has turned out to be difficult to obtain a uniform and constant flow of ammonia into the exhaust gases to be cleaned, a satisfactory distribution of the ammonia in the exhaust gases and besides to have the ammonia charged into the exhaust gases at the locations where the temperature and the oxygen content is optimal for the chemical processes.

One method suggested for solving the distribution problems involves vapourization and dilution of the ammonia in a large airstream, which is subsequently distributed to a number of spraying points. However, this solution has a distinct disadvantage in that the amount of false air in the kiln system is substantially increased. In connection with this solution there is also a risk that a portion of the ammonia may be burnt off, giving rise to NO formation, as a result of the high oxygen percentage at certain locations, and, therefore, the utilization efficiency of the ammonia is low. Also, a significant amount of heat is used for vapourizing, and the vapourizer is a highly complex and expensive apparatus.

The utilization efficiency of the ammonia is defined as the ratio of the number of NO molecules being removed per time unit to the number of NH₃ molecules being dosed per time unit.

Another known method for solving the distribution problems has shown to be the use of ammonia mixed in water, since a liquid mixture such as ammonia water, by simple means, can be dosed evenly and distributed in effective manner in the exhaust gases, so that a high utilization efficiency of the ammonia is achieved. Furthermore, the ammonia will not be burnt off and cause NO to be formed when diluted with water. However, the drawback of this solution is that the cost of ammonia water is relatively high, inter alia due to the fact that distilled water is used for the manufacture, and, therefore, this method of obtaining ammonia is very expensive. What is more, the costs of transportation per kg NH₃ from the point of manufacture to the point of application is relatively higher for ammonia water than for liquid ammonia. Besides, a further disadvantage is that the concentration of the ammonia has been determined beforehand so that continuous variations cannot be made during operation.

It is the object of the present invention to provide a method and an apparatus for reducing the NO-content of an exhaust gas by means of liquid ammonia, by which method the aforementioned disadvantages are remedied, providing, at the same time, a high utilization efficiency of the ammonia and a low cost of the ammonia.

According to the invention, this object is achieved by a method of the kind described in the introduction, being characterized in that liquid ammonia, is dosed, as a function of the NO-content of the exhaust gases to be cleaned, to a collecting point where it is mixed with a stream of the water to form ammonia water, before being introduced into the NO-containing gases, the hydraulic pressure and the volume flows of the liquid ammonia and water to the collecting point, and the flow of ammonia water from the collecting point, being controlled by means of separate pumps for pumping the liquid ammonia and water to the collecting point.

By mixing the liquid ammonia with water, such as mains water, sewage water and/or waste water, prior to its introduction into the exhaust gases, as suggested according to the invention, a higher utilization efficiency of the ammonia and a greater reduction of the NO-content is achieved compared with the known method, since the ammonia will not be burnt off and cause NO formation, when it is diluted with water. The method also provides enhanced capability of obtaining a satisfactory distribution of the ammonia in the exhaust gases without use of large amounts of air and without resulting in excessive wear of the nozzle spraying means. A further advantage of the method according to the invention is that liquid ammonia in the technical quality being used for agricultural purposes may be employed, this being by far the cheapest option, and that the purchase and transport costs are low as related to the costs involved when using ammonia water purchased from external source in finished state. By dosing the ammonia while it is still in liquid form, this will primarily result in a steady input of ammonia (the same quantity of kg NH₃ per hour). If, instead, the option involving dosage of ammonia water had been chosen, this might well result in variations in the NH₃-supply in event of changes in the water/ammonia mixing ratio arising in the course of time.

It is further an advantage that the NH₃ concentration can be varied continuously for attainment of the optimum utilization efficiency for the NO-cleaning.

The mixture of ammonia and water is preferably cooled in a heat exchanger, immediately after being mixed, in order to avoid boiling.

It is further preferred that the supply of ammonia and water, respectively, to the collecting point is controlled in such a manner that a weight ratio of water/ammonia in the mixture between 90/10 and 60/40, preferably between 85/15 and 75/25, is achieved. However, according to this invention, it is not necessary to maintain exactly the same ammonia/water ratio at all times. A constant amount of water may be applied while the input of ammonia is varied in consistency with the NO-content in the exhaust gases and which is to be removed.

In order to obtain the best possible distribution of the ammonia in the exhaust gases and hence an optimum reduction of the NO-content in the gases, it is according to the present invention preferred that the mixture of ammonia and water is introduced into the exhaust gases via a spraying nozzle, preferably a compressed air spraying nozzle, and that compressed air is injected into the ammonia water just before the introduction of the latter into the exhaust gases.

An apparatus for carrying out the method according to the invention comprises a tank for liquid ammonia; a water reservoir; pipelines for conveying liquid ammonia and water, respectively, to a collecting point and for conveying the ammonia water mixture directly from this point and onward to the location where it is introduced into the exhaust gases; pumps upstream of the collecting point for separating pumping the water and liquid ammonia to the collecting point; a heat exchanger for cooling the ammonia water mixture; and a spraying means for injecting the ammonia water mixture into the exhaust gases.

It has been found that the ammonia water is best distributed in the exhaust gases if it is sprayed into the gases by means of a nozzle, into which compressed air is injected, and, therefore, the apparatus preferably comprises a compressed-air spraying nozzle and a compressed air supply.

The compressed air nozzle may comprise a tubular duct for conveying the ammonia water, and a surrounding annular duct, which is closed at the end and adapted for conveying the compressed air, an outlet mouth and a number of connecting openings between the two ducts being arranged at a distance from the outlet mouth to allow injection of compressed air into the ammonia water.

The invention will now be described in further details with reference to the accompanying drawing, being diagrammatical and where
- Fig. 1: shows an embodiment of an apparatus according to the invention,
- Fig. 2: shows a compressed-air spraying nozzle which is used for carrying out the method according to the invention,
- Fig. 3: shows one example of a plant where the method according to the invention may be carried out, and
- Fig. 4: shows another example of a plant where the method according to the invention may be carried out.

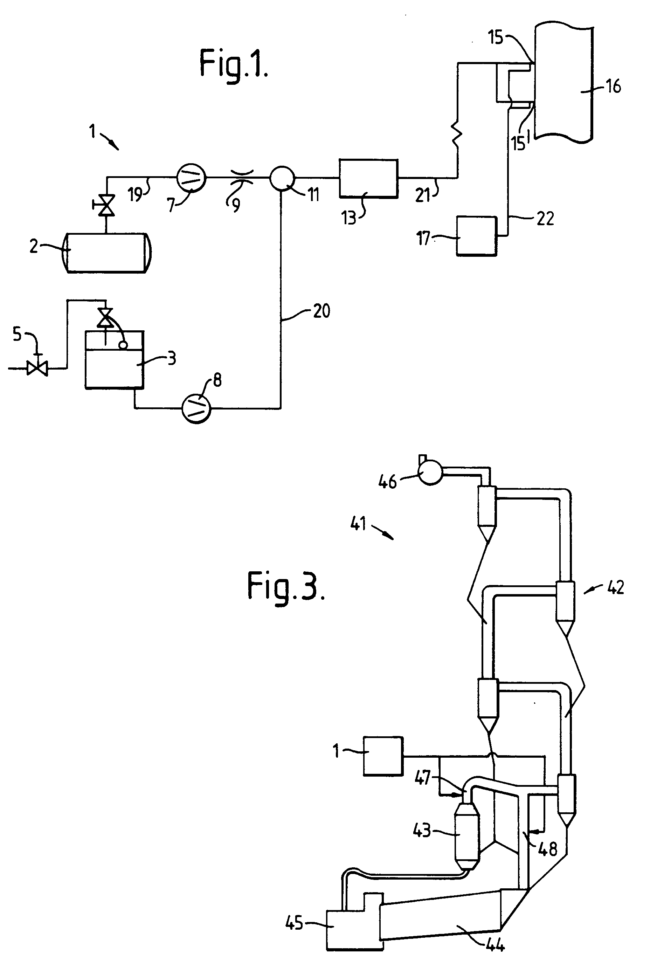

The apparatus 1 shown in Fig. 1 comprises a pressure tank 2 for storing liquid ammonia, a water reservoir 3 containing water supplied from the water mains system via a shut-off valve 5, two pumps 7, 8 for conveying liquid ammonia and water, respectively, a throttle valve 9, a collecting point or mixing chamber 11 for mixing of ammonia and water, a heat exchanger 13 for cooling the ammonia water, nozzles 15, 15' for spraying the ammonia water into the exhaust gases in an exhaust gas duct 16, a compressed air supply 17, and ducts 19, 20, 21 and 22.

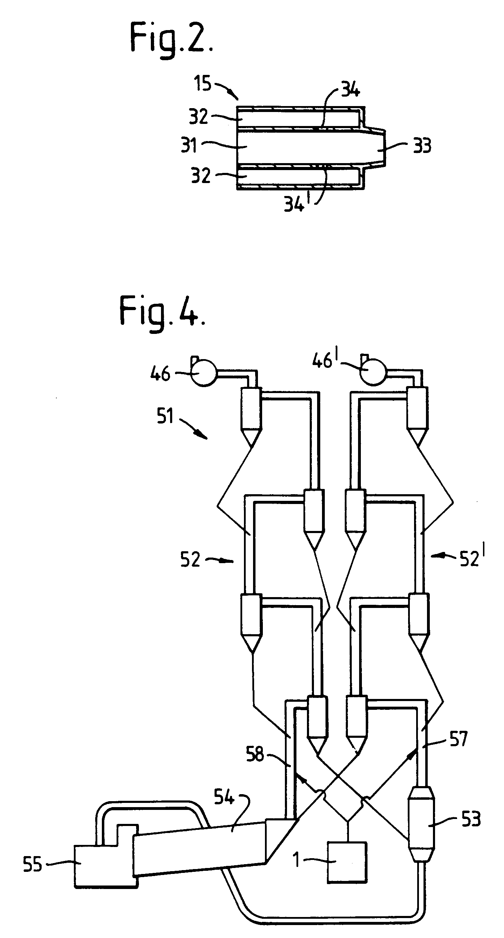

In Fig. 2 is shown a compressed-air nozzle 15 which may advantageously be used for spraying ammonia water into the exhaust gases. The nozzle 15 comprises a tubular duct 31 for conveying the ammonia water, a surrounding annular duct 32, closed at the end and adapted for conveying compressed air, an outlet mouth 33 and a number of connecting openings 34, 34' between the two ducts.

Fig. 3 shows an example of a SLC-S kiln plant 41 for burning of cement clinker where the method according to the invention may be exploited to great advantage since this plant incorporates features for adjusting the temperature as well as the O₂ level for optimizing the cleaning efficiency, without having any effect whatsoever on the capacity of the plant or its operating economy. As is shown in the figure, the kiln plant 41 comprises a cyclone preheater string 42 with four cyclones, a precalciner 43, a rotary kiln 44, a clinker cooler 45 and a fan 46.

In principle, the ammonia water from the apparatus 1 can be sprayed into the exhaust gases at two locations, viz. into the exhaust gases leaving the precalciner 43 of the kiln plant via an exhaust gas duct 47 or into the exhaust gases leaving the rotary kiln 44 of kiln plant via an exhaust gas duct 48.

Fig. 4 shows an example of a SLC kiln plant 51 which is also used for burning cement clinker where the method is also applicable. This kiln plant 51 comprises two cyclone preheater strings 52, 52' each provided with four cyclones, a precalciner 53, a rotary kiln 54, a clinker cooler 55 and two fans 46, 46'. In this kiln plant the injection of the ammonia water from the apparatus 1 can take place at 57 and 58.

The oxygen required for the process is present in the exhaust gas. It may be assumed that the kiln is running with a normal excess of air, leaving 1-3 % oxygen at the point, where the ammonia water is injected. The air introduced during the spraying is such a small mass flow compared to the smoke gas mass flow, that it does not increase the %O₂ significantly.

## Claims

1. A method for selective non-catalytic reduction of the NO-content of exhaust gases from a kiln plant by means of ammonia which is introduced into the NO-containing exhaust gases in the presence of oxygen (O₂) at a temperature between 700° and 1100°C; characterised in that liquid ammonia, is dosed, as a function of the NO-content of the exhaust gases to be cleaned, to a collecting point (11) where it is mixed with a stream of the water to form ammonia water, before being introduced into the NO-containing gases, the hydraulic pressure and the volume flows of the liquid ammonia and water to the collecting point (11), and the flow of ammonia water from the collecting point, being controlled by means of separate pumps (7,8) for pumping the liquid ammonia and water to the collecting point (11).

2. A method according to claim 1, wherein the water is supplied to the collecting point (11) in a smooth uniform flow.

3. A method according to claim 1 or claim 2, wherein the ammonia water, immediately after being mixed, is cooled in a heat exchanger in order to avoid boiling.

4. A method according to any one of the preceding claims, wherein the feed of liquid ammonia and water to the collecting point (11) is controlled in such a manner that a weight ratio of water/ammonia in the mixture between 90/10 and 60/40 is achieved.

5. A method according to claim 4, wherein the weight ratio is between 85/15 and 75/25.

6. A method according to any one of the preceding claims, wherein the ammonia water is introduced into the exhaust gases via a spraying nozzle (15).

7. A method according to claim 6, wherein the nozzle is a compressed air spraying nozzle.

8. Apparatus for carrying out the method according to any one of the preceding claims, characterised in that it comprises a tank (2) for liquid ammonia; a water reservoir (3); pipelines (19,20,21) for conveying liquid ammonia and water, respectively, to a collecting point (11) and for conveying the ammonia water mixture directly from this point and onward to the location where it is introduced into the exhaust gases; pumps (7,8) upstream of the collecting point (11) for separating pumping the water and liquid ammonia to the collecting point (11); a heat exchanger (13) for cooling the ammonia water mixture; and a spraying means (15) for injecting the ammonia water mixture into the exhaust gases.

9. Apparatus according to claim 8, in which the spraying means is compressed air spraying nozzle (15) and there is a compressed air supply (17) for the nozzle.

10. Apparatus according to claim 9, wherein the compressed air nozzle (15) comprises a tubular duct (31) for conveying the ammonia water and having an outlet mouth (33); a surrounding annular duct (32), which is closed at its end, for conveying compressed air; and a number of connecting openings (34,34') between the two ducts (31,32) arranged at a distance from the outlet mouth (33).

## Patentansprüche

1. Verfahren zur selektiven nicht-katalytischen Reduzierung des Stickstoffmonoxidgehalts der Abgase einer Ofenanlage mittels Ammoniak, das in Anwesenheit von Sauerstoff (O₂) bei einer Temperatur von 700° bis 1100° C in die Stickstoffmonoxid enthaltenden Abgase eingeleitet wird, dadurch **gekennzeichnet**, daß flüssiges Ammoniak in Abhängigkeit vom Stickstoffmonoxidgehalt der zu reinigenden Abgase dosiert an einer Sammelstelle (11) zugeführt wird, wo es mit einem Wasserstrom vermischt wird, um Ammoniakwasser zu bilden, bevor es in die Stickstoffmonoxid enthaltenden Gase eingespeist wird, wobei der hydraulische Druck und die Volumenströme des flüssigen Ammoniaks und des Wassers zu der Sammelstelle (11) und der Strom des Ammoniakwassers von der Sammelstelle mit getrennten Pumpen (7, 8) gesteuert werden, um das flüssige Ammoniak und das Wasser zu der Sammelstelle (11) zu pumpen.

2. Verfahren nach Anspruch 1, wobei das Wasser in einem glatten gleichförmigen Strom der Sammelstelle (11) zugeführt wird.

3. Verfahren nach Anspruch 1 oder 2, wobei das Ammoniakwasser unmittelbar nach der Vermischung in einem Wärmetauscher gekühlt wird, um ein Kochen zu verhindern.

4. Verfahren nach einem der vorhergehenden Ansprüche, wobei die Zufuhr des flüssigen Ammoniaks und des Wasser zu der Sammelstelle (11) derart gesteuert wird, daß ein Gewichtsverhältnis von Wasser/Ammoniak in dem Gemisch zwischen 90/10 und 60/40 erhalten wird.

5. Verfahren nach Anspruch 4, wobei das Gewichtsverhältnis zwischen 85/15 und 75/25 beträgt.

6. Verfahren nach einem der vorhergehenden Ansprüche, wobei das Ammoniakwasser über eine Sprühdüse (15) in die Abgase eingeleitet wird.

7. Verfahren nach Anspruch 6, wobei die Düse eine Druckluftsprühdüse ist.

8. Vorrichtung zur Durchführung des Verfahrens nach einem der vorhergehenden Ansprüche, dadurch **gekennzeichnet,** daß es umfaßt: einen Behälter (2) für flüssiges Ammoniak; einen Wasservorrat (3); Rohrleitungen (19, 20, 21) zum Zuführen von flüssigem Ammoniak beziehungsweise Wasser zu einer Sammelstelle (11) und zum Zuführen des Ammoniak-Wasser-Gemisches unmittelbar von dieser Stelle zu der Stelle, wo es in die Abgase eingeleitet wird; Pumpen (7, 8) stromaufwärts von der Sammelstelle (11) zum getrennten Pumpen des Wassers und des flüssigen Ammoniaks zu der Sammelstelle (11); einen Wärmetauscher (13) zum Kühlen des Ammoniak-Wasser-Gemisches; und eine Sprüheinrichtung (15) zum Einspritzen des Ammoniak-Wasser-Gemisches in die Abgase.

9. Vorrichtung nach Anspruch 8, wobei die Sprüheinrichtung eine Druckluftsprühdüse (15) ist und eine Druckluftquelle (17) für die Düse vorhanden ist.

10. Vorrichtung nach Anspruch 9, wobei die Druckluftdüse (15) umfaßt: einen rohrförmigen Kanal (31) zum Zuführen des Ammoniakwassers, der eine Auslaßöffnung (33) aufweist; einen umgebenden ringförmigen Kanal ((32) zum Zuführen von Druckluft, der an seinem Ende geschlossen ist; und eine Anzahl von Verbindungsöffnungen (34, 34') zwischen den beiden Kanälen (31, 32) die im Anstand von der Auslaßöffnung (33) angeordnet sind.

## Revendications

1. Procédé pour une réduction sélective non catalytique de la quantité de NO contenue dans des gaz d'échappement provenant d'une installation comportant un four industriel, réduction effectuée à l'aide d'ammoniac qui est introduit dans les gaz d'échappement contenant NO, en présence d'oxygène (O₂) à une température comprise entre 700° et 1 100 °C ; procédé caractérisé en ce que l'ammoniac liquide est introduit de façon dosée, en fonction de la teneur en NO des gaz d'échappement à épurer, vers un point de collecte (11) où cet ammoniac est mélangé à un courant d'eau pour former de l'eau ammoniacale ou ammoniaque, avant d'être introduit dans les gaz contenant NO, la pression hydraulique et les débits en volume de l'ammoniac liquide et de l'eau que l'on envoie vers le point (11) de collecte, et le débit de l'ammoniaque provenant du point de collecte étant réglés à l'aide de pompes (7, 8) séparées pour pomper l'ammoniac liquide et l'eau et pour les diriger vers le point de collecte (11).

2. Procédé selon la revendication 1, dans lequel l'eau est fournie en un débit régulier et uniforme au point (11) de collecte.

3. Procédé selon la revendication 1 ou la revendication 2, dans lequel l'eau ammoniacale ou ammoniaque, immédiatement après sa formation par mélangeage, est refroidie dans un échangeur de chaleur afin d'éviter une ébullition (de l'ammoniac).

4. Procédé selon l'une quelconque des revendications précédentes, dans lequel l'alimentation en ammoniac liquide et en eau dirigés vers le point (11) de collecte est réglée de manière que l'on obtienne dans leur mélange un rapport pondéral entre l'eau et l'ammoniac compris entre 90/10 et 60/40.

5. Procédé selon la revendication 4, dans lequel le rapport pondéral se situe entre 85/15 et 75/25.

6. Procédé selon l'une quelconque des revendications précédentes, dans lequel l'eau ammoniacale ou ammoniaque est introduite à l'aide d'une buse (15) de projection par pulvérisation dans les gaz d'échappement.

7. Procédé selon la revendication 6, dans lequel la buse est une buse à projection par pulvérisation fonctionnant à l'aide d'air comprimé.

8. Appareil pour la mise en oeuvre du procédé selon l'une quelconque des revendications précédentes, appareil caractérisé en ce qu'il comprend une cuve (2) pour l'ammoniac liquide ; un réservoir (3) d'eau ; des conduits ou pipe-lines (19, 20,21) pour transporter l'ammoniac liquide et l'eau, respectivement, vers un point (11) de collecte et pour transporter le mélange ammoniac/eau ou ammoniaque directement de ce point vers l'endroit où le mélange est introduit dans les gaz d'échappement ; des pompes (7, 8) montées en amont du point (11) de collecte pour pomper séparément l'eau et l'ammoniac liquide et les envoyer vers le point (11) de collecte ; un échangeur (13) de chaleur pour refroidir le mélange ammoniac/eau ; et un moyen ou dispositif (15) de projection par pulvérisation pour injecter le mélange ammoniac/eau (ammoniaque) dans les gaz d'échappement.

9. Appareil selon la revendication 8, dans lequel le moyen ou dispositif pour projeter par pulvérisation est une buse (15) de projection par pulvérisation à l'aide d'air comprimé, et l'appareil comporte une alimentation (17) en air comprimé de la buse.

10. Appareil selon la revendication 9, dans lequel la buse (15) à air comprimé comprend un conduit tubulaire (31) pour transporter l'eau ammoniacale ou ammoniaque et comporte une bouche (33) de sortie ; un conduit annulaire (32) qui entoure le premier, et qui est fermé à son extrémité, pour transporter de l'air comprimé ; et un certain nombre d'orifices (34, 34') assurant la connexion entre les deux conduits (31, 32) et qui sont disposés à une certaine distance de la bouche (33) de sortie.
